# EUROPEAN PATENT APPLICATION

(11) **EP 1 990 144 A2**
(43) Date of publication of application: **12.11.2008**
(21) Application number: 08155773.8
(22) Date of filing: 07.05.2008
(51) Int. Cl.: B26D 3/24, B26D 5/34, B26D 7/18, B26D 7/30, B26F 3/00, A21C 11/10, A21C 15/04

(54) **Water jet portioner**

(30) Priority: 09.05.2007 US 746511
(71) Applicant: FMC Technologies, Inc., Houston, TX 77067 (US)
(72) Inventor: Blaine, George R., Lake Stevens, WA 98258 (US); Tipper, Nicholas C., Lake Forrest Park, WA 98155 (US); Hocker, Jon A., Bothell, WA 98012 (US); Wilson, Dan F., Mountlake Terrace, WA 98043 (US)
(74) Representative: Andersson, Mikael Per Robert

(57) **Abstract**

An apparatus (20) for cutting a workpiece (100) includes a conveyor (30) for advancing the workpiece. A drive mechanism (26) is disposed above the conveyor (30) and is selectively moveable in one or more directions. A cutter (50) is attached to the drive mechanism (26) to move with the drive mechanism (26) relative to the conveyor (30). The cutter 50 is adapted to intermittently cut the workpiece (100) to form a pattern that comprises a plurality of sequential cut and uncut sections.

## Description

### BACKGROUND

Workpieces, including food products, are cut or otherwise separated into smaller portions by processors in accordance with customer needs. It is usually highly desirable to portion and/or trim the workpieces into uniform sizes, for example, for steaks to be served at restaurants or chicken fillets used in frozen dinners or in chicken burgers. Much of the portioning/trimming of workpieces, in particular food products, is now carried out with the use of high-speed portioning machines. These machines use various scanning techniques to ascertain the size and shape of the food product as it is advanced on a moving conveyor. This information is analyzed with the aid of a processing unit to determine how to most efficiently portion the food product into optimum sizes. For example, a customer may desire chicken breast portions in two different weight sizes, but with no fat or with a limited amount of acceptable fat. The chicken breast is scanned as it moves on a conveyor belt and a determination is made through the use of the processing unit as to how best to portion the chicken breast to the weights desired by the customer, thereby using the chicken breast in the most effective manner.

While some portioned workpieces, such as those described above, are packaged and sold in individual portions, others are packaged and sold as a single workpiece having a plurality of individual portions. For example, frozen goods, whether raw, precooked, or pre-baked may be cut into individual slices prior to thawing, baking, microwaving, etc., and then packaged for sale to the consumer. The consumer thaws, bakes, microwaves, etc., and consumes the goods without having to cut them into individual portions. Although packaging portioned workpieces in this manner provides a certain convenience to the consumer, loosely packaged individual portions tend to move around inside the packaging, damaging the individual portions and creating a mess. In the case of goods having toppings, the toppings are often dislodged from loosely packaged individual slices, forcing the consumer to reassemble the individual portions prior to thawing, baking, microwaving, etc.

As a workpiece advances on a conveyor, portioning and/or trimming of the workpiece can be carried out by various cutting devices, including high-speed fluid jet cutters or rotary or reciprocating blades. In the case of a fluid jet cutter, a thin, high-speed jet of cutting fluid impinges the workpiece. The cutting fluid can be water or any other suitable cutting fluid. Pressurized cutting fluid is ejected from a small orifice to create the thin, high-speed jet, as is known in the art. When the cutting fluid impinges the workpiece, a thin slice of material is removed, preferably without any appreciable amount of cutting fluid being absorbed into the workpiece.

The flow of cutting fluid from a known fluid jet cutter is selectively controlled by a blocking pin disposed within the housing of the cutter. The blocking pin comprises a rod with a round cross-section and is selectively rotated between a first position and a second position. In the first position, one end of the blocking pin covers the orifice from which the fluid jet is emitted, thereby disrupting the flow of the cutting fluid. In the second position, the blocking pin does not cover the orifice and does not disrupt the flow of the cutting fluid.

Currently known blocking pins with round cross-sections have several advantages. First, when a blocking portion of the pin becomes worn, a round pin is easily rotated so that an unworn portion of the pin performs the blocking function. Further, because known blocking pins have round cross-sections, when a blocking pin is positioned in the path of the cutting fluid, most of the cutting fluid contacts the pin at an oblique angle, thereby reducing the amount of wear on the pin. In addition, blocking pins with a round cross-section are easily manufactured from round bar stock.

While the inclusion of a round cross-section provides several advantages, it also results in at least one disadvantage. Because the pin has a round cross-section, as the pin is initially rotated from the second position to the first position, the cutting fluid is deflected off of the surface of the pin so that it is emitted from the cutter at a downward angle. This initial downward spray causes imprecise and unsightly cuts and also causes additional cutting fluid to be absorbed by the workpiece.

A conveyor belt assembly used with a high-speed fluid jet cutter must not restrict the rapid removal of the cutting fluid from the conveying surface. One method of accomplishing this is to provide a conveyor belt assembly having a conveying surface formed from a lattice network of support members. The apertures defined by the support members of the lattice network allow spent cutting fluid to drain from the conveying surface, or to pass through the conveying surface, and into a spent cutting fluid receiver.

Although existing conveyor belt assemblies of a lattice type design are capable of conveying products for use in portioning machines utilizing fluid jets, they are not without problems. One problem relates to the undesirable inclusion of cutting fluid in the portioned workpiece. As the jet of cutting fluid passes through the workpiece, it impinges the conveyor belt and a portion of the cutting fluid splashes back onto the workpiece. The splashed cutting fluid can adhere to the surface of the workpiece, especially when the workpiece is frozen. The splashed cutting fluid can also be absorbed into the workpiece.

In addition to splashing cutting fluid directly back onto the workpiece, the cutting process also creates a fine mist of cutting fluid that remains suspended in the air for an extended period of time. This mist of cutting fluid eventually settles, some of it settling on a workpiece or on the conveyor belt, where it can contact the underside of a workpiece.

### SUMMARY

An apparatus for cutting a pattern in a workpiece to divide the workpiece into smaller portions is disclosed. The apparatus includes a conveyer for advancing the workpiece through a plurality of work areas, the conveyor comprising an endless conveyer belt supported by a support structure. The apparatus further includes a cutting unit comprising a drive mechanism located above the conveyer and selectively movable relative to the conveyor. One or more cutters are coupled to the drive mechanism, which selectively moves the cutters relative to the workpiece to cut a desired pattern in the workpiece. The pattern comprises a plurality of sequential cut and uncut sections, the plurality of cut and uncut sections defining a perforation in the workpiece. The uncut sections hold the portions of the workpiece together, while the cut sections allow a consumer to separate a portion from the workpiece by tearing, thus eliminating the need for a cutting implement.

In accordance with a further aspect of the disclosed apparatus, a scanning unit scans the workpiece to detect physical characteristics of the workpiece including, but not limited to, size, shape, weight, and the presence of discontinuities. The information detected by the scanner is used by a processing unit to determine the pattern to be cut in the workpiece.

In accordance with another aspect of the disclosed apparatus, the cutter is a fluid jet cutter that includes a housing and a blocking pin disposed therein. The blocking pin is selectively rotatable between a first position and a second position. When the blocking pin is in the first position, a first end of the blocking pin is disposed in the path of the flow of cutting fluid, thereby disrupting the flow of cutting fluid emitted from the fluid jet cutter. When the blocking pin is in the second position, the blocking pin does not disrupt the flow of cutting fluid emitted from the fluid jet cutter. The first end of the blocking pin includes one or more substantially flat surfaces, one of which is located so that the flow of cutting fluid impinges the surface at an approximately 90° angle when the blocking pin is in the first position. The inclusion of a flat surface on the blocking pin decreases the transition time required to disrupt or restore the flow of cutting fluid from the fluid jet cutter.

In another aspect of the disclosed apparatus, the conveyor comprises a belt formed from a plurality of connecting rods rotationally coupled to a plurality of pickets. The connecting rods and the pickets cooperate to define a conveying surface having a plurality of apertures extending therethrough. The apertures allow cutting fluid from a fluid jet cutter to pass through the belt to a location remote to the workpiece. The apertures of the belt are larger in areas of the belt that are more frequently impinged by the cutting fluid emitted from the fluid jet cutter. The presence of larger aperture reduces the total amount of splashback caused by cutting fluid impinging the belt. Reducing splashback in turn reduces the amount of cutting fluid that adheres to or is absorbed by the workpiece.

In a further aspect of the disclosed apparatus, an exhaust unit draws air from the work area. Particles of cutting fluid suspended in the air are removed from the work area along with the air and are disposed in a location remote to the work area.

In accordance with another aspect of the disclosed apparatus, an air knife is disposed above the belt and emits a high intensity sheet of air flow onto the belt. The air flow removes excess cutting fluid from the belt. The airflow also removes particles of the workpiece created during the portioning process from the belt.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is an isometric view of one embodiment of the presently disclosed portioning apparatus;
FIGURE 2 is a top view of a known portioning apparatus;
FIGURES 3A-3E show patterns cut in workpieces by the portioning apparatus shown in FIGURE 1;
FIGURE 4 is a top view of a workpiece portioned by the portioning apparatus shown in FIGURE 1;
FIGURE 5 is a horizontal cross-sectional view of a high speed fluid jet cutter in accordance with the portioning apparatus shown in FIGURE 1;
FIGURE 6 is a horizontal cross-sectional view of a high speed fluid jet cutter in accordance with the portioning apparatus shown in FIGURE 1;
FIGURE 7 is a vertical cross-sectional view of the high speed fluid jet cutter shown in FIGURE 5;
FIGURE 8 is an isometric view of a blocker pin of the high speed fluid jet cutter shown in FIGURE 5;
FIGURE 9 is an isometric view of a known conveyer used with a fluid jet cutter;
FIGURE 10 is a plan view of a conveyer belt in accordance with the portioning apparatus shown in FIGURE 1;
FIGURE 11 is a plan view of a conveyer belt in accordance with the portioning apparatus shown in FIGURE 1; and
FIGURE 12 is an isometric, partial cutaway view of a conveyer belt in accordance with the portioning apparatus shown in FIGURE 1.

### DETAILED DESCRIPTION

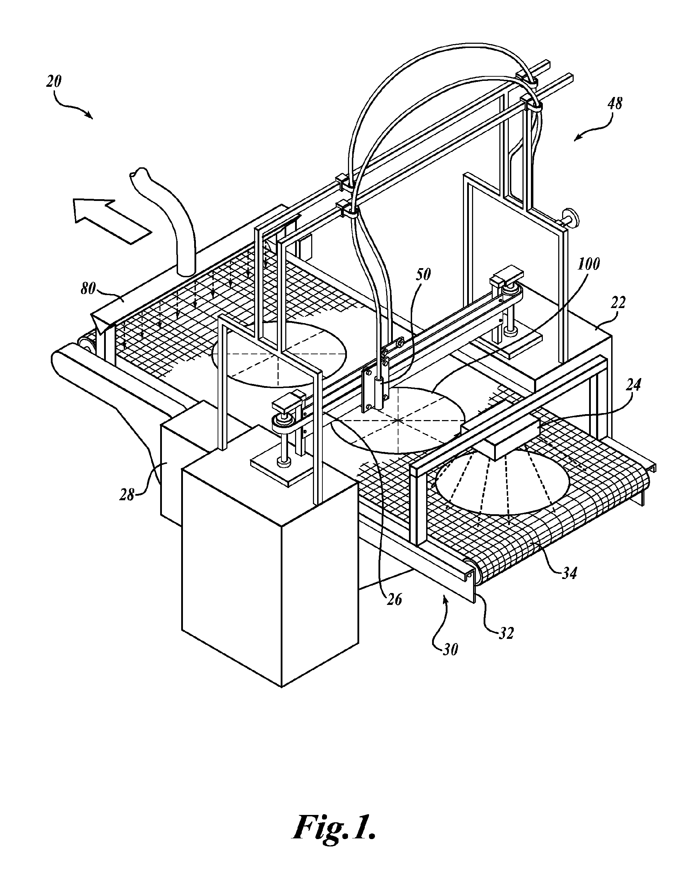

Referring to FIGURE 1, one embodiment of the presently disclosed portioning apparatus 20 is shown. Portioning machines are known in the art, and such machines, or portions thereof, are disclosed in prior patents, for example, U.S. Patent Nos. 5,365,816, 5,868,056, and 6,826,989, which are incorporated by reference herein. As is typical, the portioning apparatus 20 includes a conveyor 30 spanning the entire length of the apparatus 20, with the conveyor including an endless belt 34 supported by a support structure 32 constructed in a standard manner. The conveyor belt 34 is driven at a selected speed by a drive motor (not shown), which can be a variable speed motor to thus adjust the speed of the belt 34. Workpieces 100 are advanced by the belt 34 to be operated on by the cutting unit 48. Workpieces 100 can be any of a wide variety of items, including, but not limited to, pies, dough, cookie dough, cookie bars, bread, flat bread, cakes, torts, candy, and other baked goods. The workpieces can be food that is prepared or partially prepared and then frozen for storage and shipment. The workpieces are then ready-to-eat after thawing, baking, warming, or microwaving, etc. As will be appreciated, some of the individual foods listed above meet these criteria. It should be appreciated that the portioning apparatus 20 is also suitable for use with workpieces 100 other than dough.

A workpiece 100 is first carried by the conveyor 30 to a scanning unit 24 disposed above the belt. The scanning unit 24 scans the workpiece to ascertain selected physical parameters, such as length, width, size, area, circumference, thickness, volume, and shape. Weight can also be determined, typically by utilizing an assumed density for the workpiece. In addition, it is possible to locate selected features of the workpiece 100 that appear as discontinuities. For example, if the workpiece is a baked good with different toppings, the type, size, location, and number of various toppings can be determined.

The scanning can be carried out by a variety of techniques, including utilizing a video camera to view a workpiece illuminated by one or more light sources. Light from the light source extends across the moving conveyor belt 34 to define a sharp shadow or light stripe line, with the area forwardly of the transverse beam being dark. When no workpiece is being carried by the conveyor, the shadow line/light stripe forms a straight line across the conveyor belt. However, when a workpiece passes across the shadow line/light stripe, the upper, irregular surface of the workpiece produces an irregular shadow line/light stripe as viewed by a video camera directed downwardly on the workpiece and the shadow line/light stripe. The video camera detects the displacement of the shadow line/light stripe from the position it would occupy if no workpiece were present on the conveyor belt. This displacement represents the thickness of the workpiece along the shadow line/light stripe. The length of the workpiece is determined by the length of time that shadow lines are created by the workpiece. In this regard, an encoder is integrated into the conveyor 30, with the encoder generating pulses at fixed time intervals corresponding to the forward movement of the conveyor.

In lieu of a video camera, the scanning unit 24 may instead utilize an x-ray apparatus for determining the physical characteristics of the workpiece, including its shape, mass and weight. X-rays may be passed through the object in the direction of an x-ray detector. Such x-rays are attenuated by the workpiece in proportion to the mass thereof. The x-ray detector is capable of measuring the intensity the x-rays received thereby after passing through the workpiece. This information is utilized to determine the overall shape and size of the workpiece, as well as the mass thereof. An example of such an x-ray scanning device is disclosed by U.S. Patent No. 5,585,603, incorporated by reference herein.

The data measured/gathered by the scanning unit 24 is transmitted to a processing unit 28, preferably on board the portioning apparatus 20, which records the location of the workpiece 100 on the conveyor 30, as well as the shape and other parameters of the workpiece. With this information, the processing unit 28 determines how to optimally cut or portion the workpiece.

The portioning may be carried out by various types of cutting/portioning devices including high-pressure water jets as disclosed in U.S. Patent No. 5,927,320, which is incorporated by reference herein. Other types of cutting devices may be utilized, including band saws, reciprocating saws, circular saws, guillotine knives, and lasers.

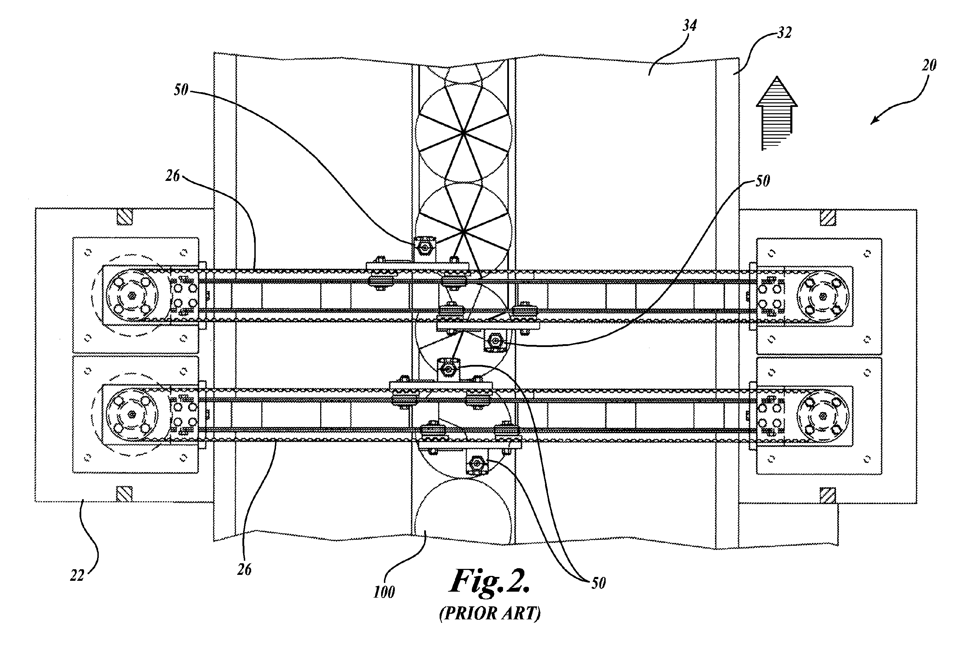

Still referring to FIGURE 1, workpieces 100 are advanced by the conveyor 30 from the scanning unit 24 to a cutting unit 48. The cutting unit 48 includes a drive mechanism 26 spanning across the conveyor and adapted to carry one or more cutters 50. The processing unit 28 controls the drive mechanism 26 to move the cutters 50 relative to the conveyor 30, thereby enabling the cutters 50 to produce a variety of shapes and patterns in the workpieces 100. FIGURE 1 illustrates one embodiment of the presently disclosed portioning apparatus 20 wherein two cutters 50 are coupled to a single drive unit 26. The presently disclosed portioning apparatus 20 may also include additional drive mechanisms 26 and additional cutters 50 coupled thereto. Such use of additional drive mechanisms 26 and cutters is known in the art. For example, FIGURE 2 illustrates a portioning apparatus 20 disclosed in prior art U.S. Patent No. 5,365,816 that includes two drive mechanisms 50, each with a pair of cutters 50 attached thereto. It should be appreciated that in addition to or instead of the single axis cutters shown in FIGURES 1 and 2, the presently disclosed portioning apparatus 20 can include multi-axis cutters such as the one disclosed in U.S. Patent No. 5,868,056.

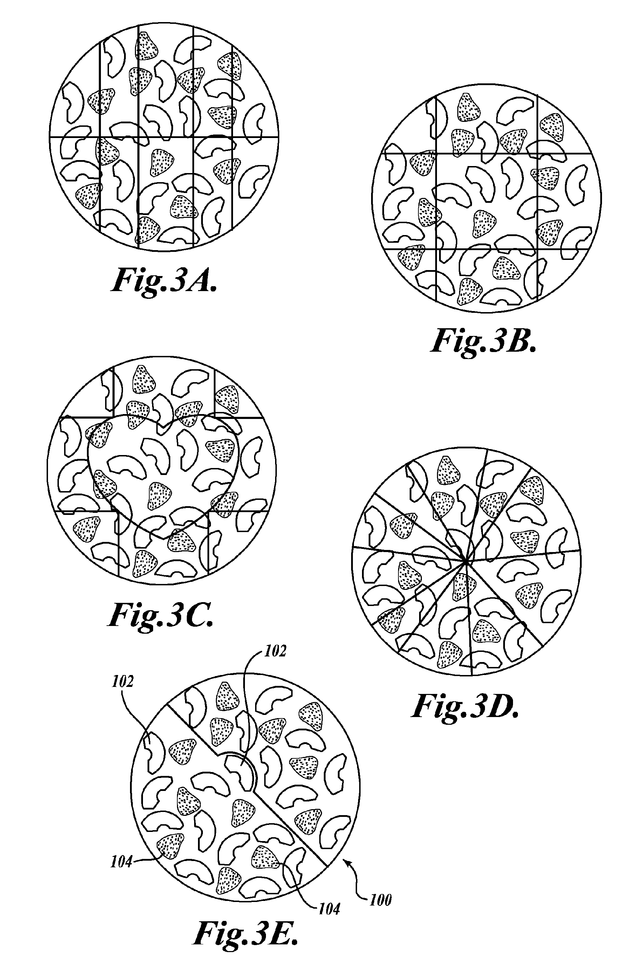

FIGURES 1 and 2 illustrate an embodiment wherein the workpiece 100 is a baked good with a generally round perimeter, such as a pie, and the portioning apparatus 20 divides the workpiece into eight triangular slices. It should be appreciated that the processing unit 28 can be programmed to control the motion of the cutters 50 relative to the conveyor 30 to cut various other patterns in the workpieces 100. Several non-limiting examples of other patterns are illustrated in FIGURES 3A-3E.

FIGURE 3A illustrates a "cross-cut" pattern with one horizontal cut and several vertical cuts dividing the workpiece 100 into strip-like portions. The width of the portions can be uniform or can vary so that each portion has approximately the same weight or surface area.

FIGURE 3B illustrates a pattern comprising two horizontal cuts and two vertical cuts to form a "tic-tac-toe" pattern in the workpiece 100.

FIGURE 3C illustrates a pattern having a novelty shape in the center of the workpiece 100. As illustrated, the center portion is heart-shaped, but it should be appreciated that the center portion can have any shape, including clovers, diamonds, letters, numbers, animals, flowers, sports equipments, or any other desired shape. The remaining portion of the workpiece 100 is divided into portions that can be cut outwardly from the center, in the form of the "tic-tac-toe" grid of FIGURE 3B, or in any other desired shape or pattern.

FIGURE 3D illustrates a pattern similar to a standard pattern shown in FIGURES 1 and 2, but modified to provide different sized portions. By varying the angles at which the portions converge, portions having different weights are produced. Thus, the workpiece is portioned to provide both smaller and larger portions.

FIGURE 3E illustrates a pattern in the workpiece 100, wherein information about the workpiece obtained by the scanning unit 24 is used to determine the pattern based on the type and location of discontinuities detected in the workpiece 100. In the example shown in FIGURE 3E, the workpiece is a baked good that includes a plurality of a first type of discontinuity 102, shown as an apple slice, and a plurality of a second type of discontinuity 104, shown as a strawberry. It should be appreciated that the discontinuities 102, 104 are not limited to specific types of toppings, but may include any physical discontinuity present in a workpiece. Further, the workpiece is not limited to a baked good, but may be any type of workpiece suitable for portioning with the disclosed portioning apparatus 20. The processing unit 28 uses information about the discontinuities 102, 104 in the workpiece received from the scanning unit 24 to determine a portioning pattern comprising one or more cuts to be made in the workpiece. The processing unit 28 can be programmed to determine the portioning pattern according to various criteria. FIGURE 3E shows a cut produced when the processing unit 28 is programmed to create a portioning pattern that avoids certain discontinuities in the workpiece. In the illustrated example, the path of an otherwise straight cut is partially modified to avoid a particular discontinuity, in this case, an apple slice 102 used as a topping on the workpiece 100.

It should be appreciated that the processing unit 28 may determine portioning patterns according to various other criteria without departing from the spirit of the present disclosure. According to one criterion, the processing unit 28 portions the workpiece according to a predetermined pattern, but virtually orients the pattern on the workpiece to minimize the intersection of the pattern with workpiece discontinuities. According to another criterion, the processing unit 28 optimizes the orientation of a predetermined pattern so that the number of workpiece discontinuities is substantially equal for each portion.

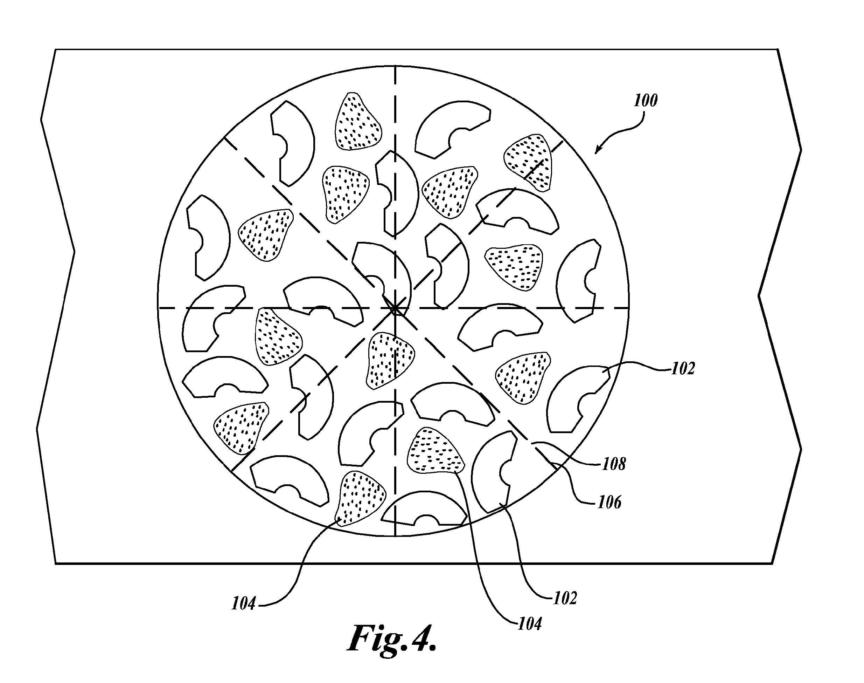

Referring to FIGURE 4, the cutters 50 of the presently disclosed portioning apparatus 20 are adapted to intermittently cut the workpiece 100 to form a cut line or pattern comprising a series of sequential cut sections 106 and uncut sections 108. The cut and uncut sections 106, 108 form a perforation in the workpiece, the uncut sections 108 of which are sufficient to prevent the workpiece portions from becoming detached during processing. At the same time, the cut sections 106 allow the portions of the workpiece 100 to be easily separated at the perforation. Accordingly, a person wishing to separate an individual portion from the workpiece can do so by simply tearing along the perforation. In this manner, a person can selectively remove portions of the workpiece without being required to cut the workpiece with a knife or other cutting implement.

Still referring to FIGURE 4, a workpiece portioned by the presently disclosed portioning apparatus 20 has individual slices defined by a plurality of perforated cuts. Inclusion of the perforated cuts allows a consumer to detach a slice of the workpiece without having to cut the workpiece. While a workpiece cut into triangular slices is disclosed, it should be appreciated that the disclosed perforated cut can be used with any cutting pattern, including those shown in FIGURES 3A-3E. It should also be appreciated that the perforated cut can be used with a variety of types of workpiece, including cookie dough, bread, pie, baked goods, and other suitable food items.

The length of a cut section 106 is generally controlled to have a fixed relationship to an adjacent uncut portion. For example, for certain types of workpieces, a 5:1 ratio of cut section to uncut section provides the desired stability to hold the workpiece together, while allowing a consumer to separate a slice from the workpiece by tearing at the perforation. It should be understood that the desired ratio of cut section length to uncut section length will vary between different types of workpieces. The desired ratio may also vary within a single workpiece based on differences in the local thickness, density, or other characteristics of the workpiece 100. Optimal ratios can be determined by the processing unit 28 based on information received from the scanning unit 24. Such ratios can vary from at least 10:1 to 1:5.

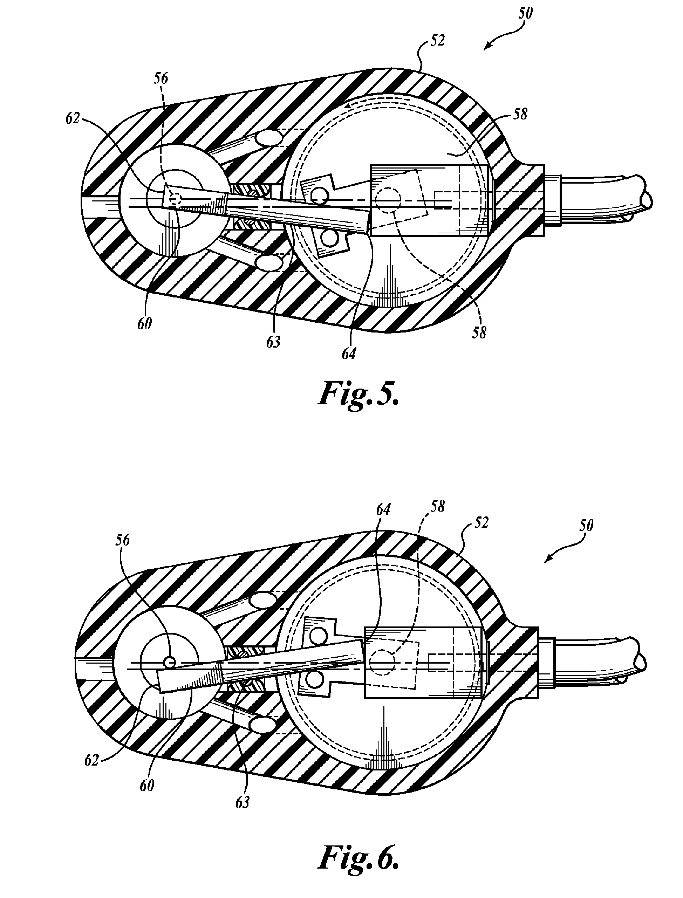

A further aspect of the presently disclosed portioning apparatus 20 is a blocking pin 60 disposed within a fluid jet cutter 50, which enables the cutter 50 to start or stop the high speed flow of cutting fluid with increased precision. Referring to FIGURES 5-7, a fluid jet cutter 50 includes a housing 52 with a fluid inlet 54, through which cutting fluid is introduced into the housing, and a fluid outlet 56, through which a high speed flow of cutting fluid 51 is emitted from the housing 52. A blocking pin 60 and a rotary actuator 58 are disposed within the housing 52. The rotary actuator 58 generates a rotary output torque and is coupled to the blocking pin 60 so that the rotary output torque from the rotary actuator is transmitted to the blocking pin 60 to rotate or pivot the blocking pin 60 between a first position and a second position. In the first position, shown in FIGURE 5, the blocking pin 60 is positioned to disrupt the high pressure flow of cutting fluid through the fluid outlet 56. In the second position, shown in FIGURE 6, the blocking pin 60 is positioned so that it does not disrupt the high pressure flow of cutting fluid through the fluid outlet 56.

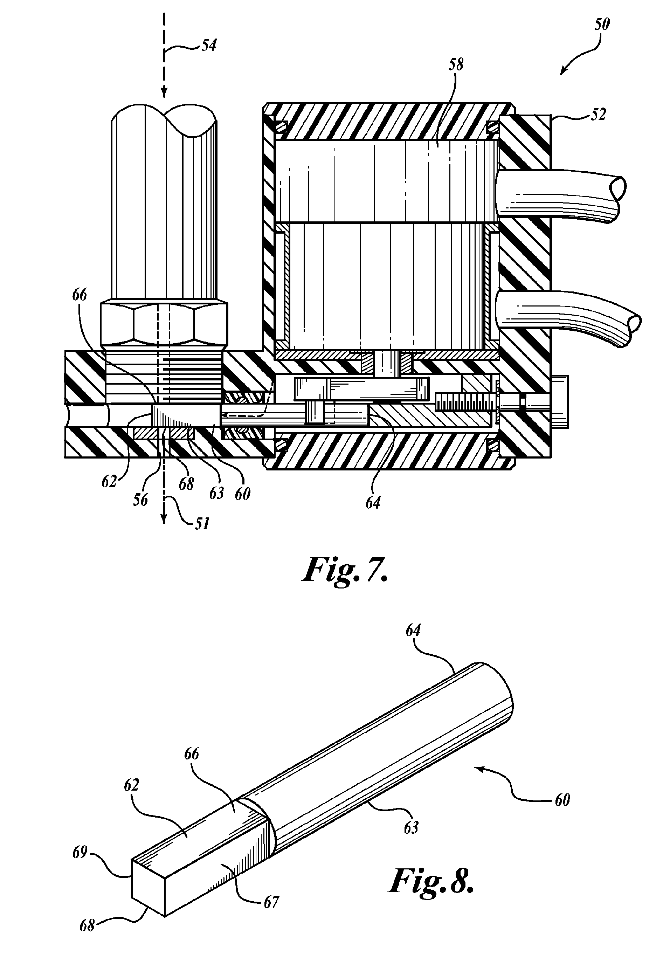

Referring to FIGURE 8, the blocking pin 60 has a central portion 63 with a generally round cross-section disposed between a first end portion 62 and a second end portion 64. The first end portion includes a substantially flat first surface 66, second surface 67, third surface 68, and fourth surface 69. The surfaces are positioned to extend approximately parallel to the centerline of the blocking pin 60 so that the first surface 66 and third surface 68 are substantially parallel to each other and orthogonal to the second surface 67 and fourth surface 69. As a result, the cross-section of the first end portion 66 has a generally square or rectangular shape. Of course, the end portion of the blocking pin can be formed in other cross-sectional shapes, such as triangular, pentagonal, or hexagonal.

As shown in FIGURE 7, the blocking pin is positioned within the housing 52 so that first and third surfaces 66, 68 are approximately perpendicular or normal to the direction of the cutting fluid flow as the cutting fluid enters the housing 52 through the fluid inlet 54. As a result, the second and fourth surfaces 67, 69 are parallel to the direction of the cutting fluid flow as the cutting fluid enters the housing 52 through the fluid inlet 54.

As the blocking pin 60 moves from the second position to the first position, the cutting fluid enters the housing 52 and impinges the first surface 66 of the blocking pin 60. Because the cutting fluid enters the housing 52 in a direction lateral to the first surface 66, the substantially flat first surface 66 deflects the cutting fluid broadly. Further, the substantial flatness of the first surface 66 decreases the time required to transition from the second position, when the flow of cutting fluid is not disrupted, to the first position, when the blocking pin 60 completely disrupts the flow of the cutting fluid.

The high pressure flow of cutting fluid that impinges the first surface 66 of the blocking pin 60 causes wear on the first surface, eventually decreasing the effectiveness of the surface to act as a blocker. When the first surface 66 of the blocking pin 60 becomes worn, the blocking pin can be rotated so that the second, third, or fourth surface is impinged by the flow of cutting fluid. As each successive surface becomes worn, the blocking pin 60 can again be rotated so that an unworn surface is impinged by the flow of cutting fluid. By rotating the blocking pin 52 until all surfaces on the first end portion 62 of the blocking pin are worn, the useful life of the blocking pin is increased fourfold. Further, the second end portion 64 of the blocking pin 60 can be formed with a plurality of substantially flat surfaces similar to the first through fourth surfaces of the first end portion 62, When all four surfaces of the first end portion 62 are worn, the orientation of the blocking pin 60 within the housing 52 can be reversed so that the second end portion 64 of the blocking pin 60 selectively blocks the fluid outlet in the same manner as previously done by the first end portion 62 of the blocking pin 60.

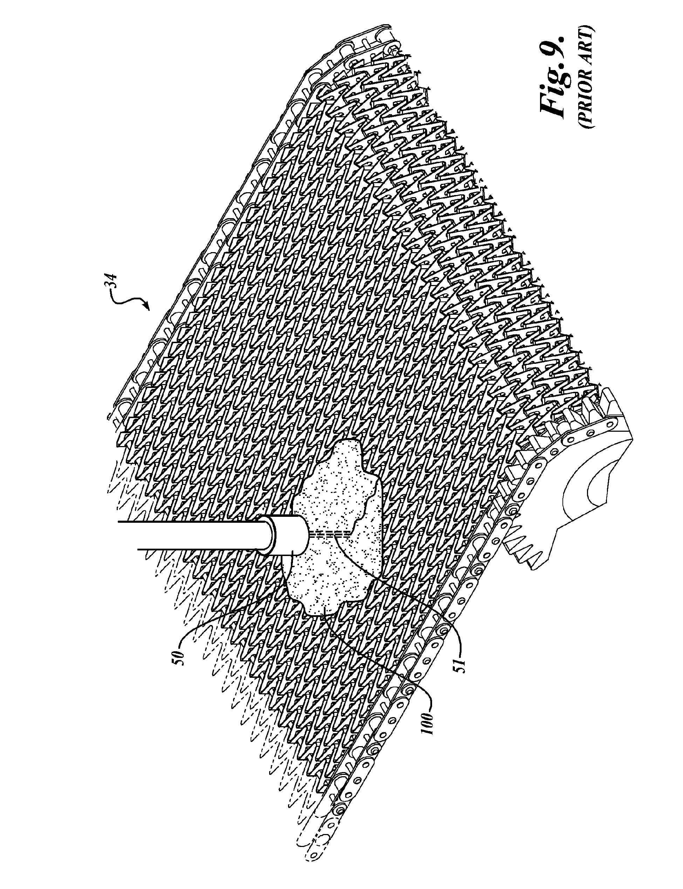

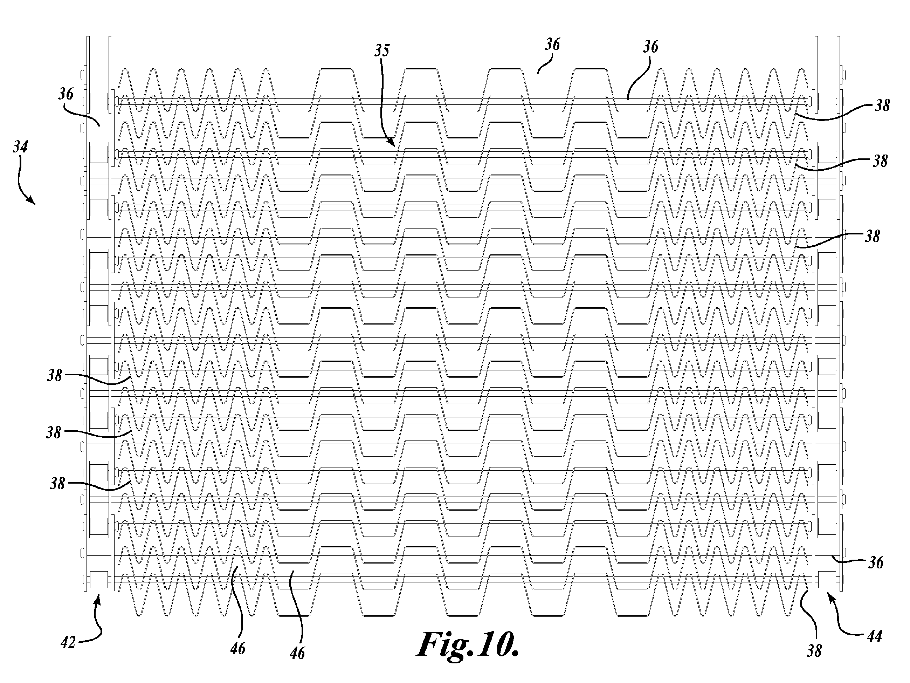

FIGURE 9 illustrates a known conveyor belt 34 disclosed in U.S. Patent No. 6,854,590, incorporated by reference herein. FIGURE 10 illustrates a conveyor belt 34 in accordance with one aspect of the presently disclosed portioning apparatus 20, representing an improvement to the belt shown in FIGURE 9.

Referring to FIGURE 10, the conveyor belt 34 comprises a conveying surface 35 formed from a plurality of pickets 38. The pickets 38 are pivotally joined to one another and to a left and right drive chain 42, 44 by a plurality of connecting rods 36. The connecting rods 36 are elongate shafts that extend transversely and horizontally just below the conveying surface 35. The connecting rods 36 are inserted through the picket 38, pivotally joining adjacent pickets 38 to one another, and pivotally joining the pickets 38 to the drive chains 42, 44.

Each picket 38 has a length formed from a single strand of flat wire. The flat wire is repetitively bent to form links 39, where each link is an individual "wave" in the elongate wave-shape of the pickets 38. The pickets 38 are coupled to the left and right drive chains 42, 44 so that the length of the pickets 38 is perpendicular relative to the longitudinally oriented length of the drive chains 42, 44. The pickets 38 cooperate with the connecting rods 36 to define a plurality of apertures 46a and 46b extending through the conveying surface 35.

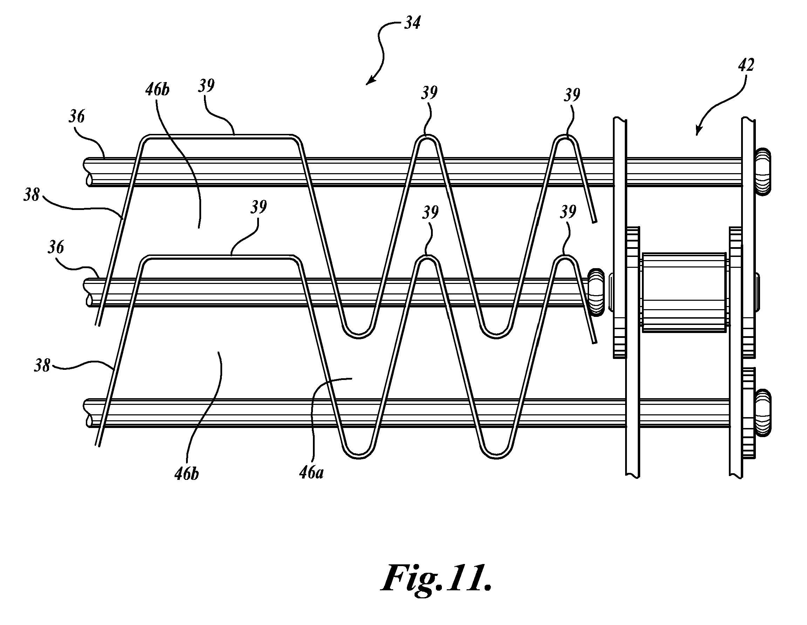

In another aspect of the presently disclosed portioning apparatus 20, the pickets 38 of the conveyer belt 34 are formed so that the apertures 46b in the belt 34 are larger in areas of the belt that are subjected to a greater volume of cutting fluid during a portioning operation. As shown in FIGURES 10 and 11, links 39 in a central portion of a picket 38 are wider than links 39 in the lateral portions of the picket 38, i.e. portions of the pickets 38 proximate to the drive chains 42, 44.

When the portioning apparatus 20 portions a workpiece 100 in the manner shown in FIGURE 4, the section of the belt 34 under the center of the workpiece 100 is subjected to four passes of the fluid jet cutter 50. Each pass creates a certain amount of "splashback" as the cutting fluid impinges the conveyor belt 34 and is deflected back towards the workpiece 100. As a result, a portion of the workpiece that is subject to multiple cutter passes will experience a greater amount of splashback, increasing the amount of fluid that is absorbed by or adheres to the workpiece 100 in that area. Increasing the size of the apertures 46b in the belt 34 allows a greater portion of the cutting fluid to pass through the conveyor belt 34 without impinging a connecting rod 36 or picket 38. This in turn decreases the amount of splashback to which the workpiece 100 is subjected. In the case of the workpiece 100 illustrated in FIGURE 4, while the central portion of the workpiece 100 is subject to four cutter passes, increasing the amount of splashback at the center of the workpiece 100, the apertures 46b in the center portion of the belt 34 are larger than the apertures 46a at the edge portions of the belt, reducing the amount of splashback at the center of the workpiece 100. It should be understood that differently sized apertures can be arranged in the belt to support different types of workpieces 100 and different cutting patterns. It should be further understood that various other belts utilizing a lattice network of support members can be modified to include different sized apertures without departing from the spirit and scope of the present disclosure.

As a fluid jet cutter 50 portions a workpiece 100, fine particles of cutting fluid are reflected off of the workpiece, the conveyor belt, and the bottom of the cutting fluid collection tank. These reflected particles are suspended in the air to form a mist around the conveyor belt. If the particles located above the conveyor belt are not removed from the work area, they can settle onto surfaces in the work area, including surfaces of workpieces 100 being portioned therein. In addition, because the airflow under the conveyor belt is turbulent, fluid particles suspended below the conveyor belt can be blown back up through the conveyer belt onto the workpieces 100.

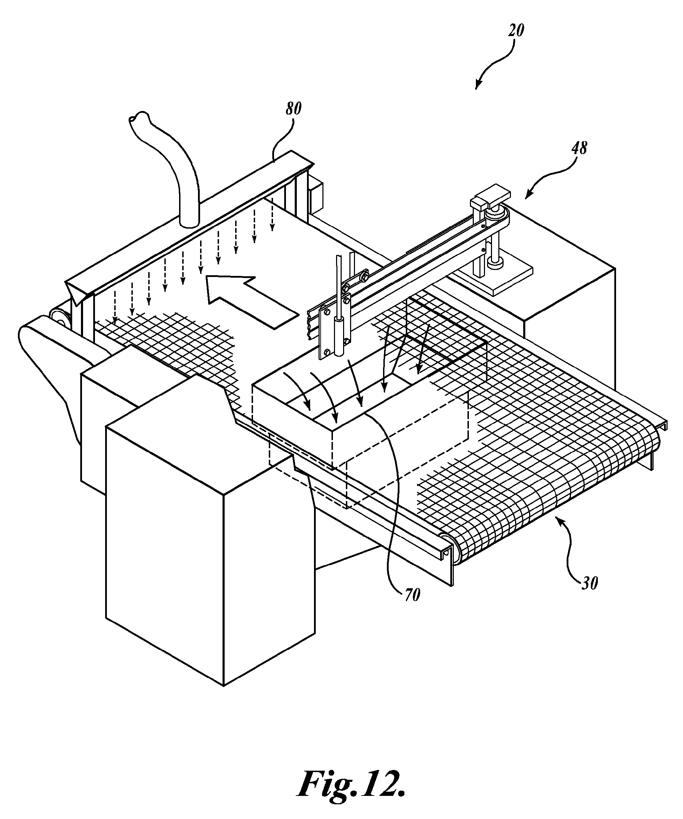

Referring to FIGURE 12, an exhaust unit 70 is disposed beneath the conveyor 30. The exhaust unit 70 draws air from around the cutting unit 48 in a downward direction and transports the air to a remote location. As a result, cutting fluid particles suspended in the air are also removed from the work area. As the exhaust unit 70 draws air from the work area, a downward velocity is imparted on the cutting fluid particles. To ensure that the cutting fluid particles are removed from the work area, the downward velocity imparted on the cutting fluid particles in the immediate vicinity of the upper and lower surfaces of the conveyor belt must be sufficient to overcome any upward velocity resulting from the turbulent flow below the conveyor belt.

Standard exhaust units used in conjunction with fluid jet cutters normally result in an air velocity in the area of the conveyor belt of approximately 200 feet per minute. In contrast, the exhaust system of the presently disclosed portioning apparatus draws air from the area of the conveyor belt at a velocity of at least 250 feet per minute. In one preferred embodiment of the presently disclosed portioning apparatus 20, the exhaust unit draws air from the area of the conveyor belt at a velocity of approximately 400 feet per minute. Increasing the rate at which the exhaust unit draws air from the work unit improves workpiece quality by lowering the amount of cutting fluid particles in the work area that eventually settle on the workpieces 100. It should be appreciated that while the exhaust unit 70 of the disclosed embodiment is disposed under the conveyor 30, the exhaust unit 70 can be located in any position that allows the unit to draw air from the work area. Other suitable locations include, but are not limited to, above the belt of the portioning apparatus, in the ceiling of the workroom in which the portioning apparatus is located, or in a wall.

After the workpiece 100 has been portioned by the cutting unit 48, the conveyor 30 advances the portioned workpiece 100 to an area where the workpiece is removed from the belt 34 for packaging or further processing. Referring to FIGURE 12, the belt 34 continues to move along an endless loop, passing under an air knife 80 disposed above the belt 34. The air knife 80 emits a high intensity sheet of air flow onto the belt 34. The air flow emitted from the air knife 80 dries the belt 34 by blowing remaining cutting fluid off of the belt. The air knife also removes particles of the workpiece remaining from the portioning process. Utilizing the air knife 80 in the disclosed portioning apparatus 20 helps to keep the belt 34 dry so that the next workpiece 100 placed on the belt is not subject to excess cutting fluid, which may adhere to or be absorbed by the workpiece 100. Further, removing particles of previously portioned workpieces prevents the particles from sticking to future workpieces, reduces the amount of cutter fluid splashback during the portioning process, and helps to maintain a sanitary work environment.

While illustrative embodiments have been illustrated and described, it will be appreciated that various changes can be made therein without departing from the spirit and scope of the invention.

Although not presently claimed, the following exemplary embodiments, which are fully disclosed by the present specification, are believed to be patentable as recited:
16. The apparatus of item 7, wherein at least one end portion of the rod includes a substantially flat surface, the substantially flat surface extending through the path of the flow of the cutting fluid when the rod is located in the first position.
17. An apparatus for cutting a pattern in a workpiece, the apparatus comprising:
   (a) a conveyor for advancing the workpiece;
   (b) a drive mechanism disposed relative to the conveyor, the drive mechanism being selectively movable relative to the conveyor;
   (c) a cutter carried by the drive mechanism,
   (d) a scanner for scanning the workpiece to detect a physical parameter of the workpiece; and
   (e) a processing unit operatively connected to the cutter to control the cutter to intermittently cut the workpiece so that the cutting pattern comprises a plurality of sequential cut and uncut sections, the processing unit controlling a path of travel of the cutter to define the cutting pattern so that the workpiece comprises a plurality of portions defined by the cutting pattern.
18. The apparatus of item 17, wherein the detected physical parameter of the workpiece is selected from the group consisting of length, width, shape, surface area, thickness, circumference, weight, type of workpiece discontinuity, number of workpiece discontinuities, color, and workpiece topography.
19. The apparatus of item 18, wherein the processing unit determines the cutting pattern according to the detected physical parameter of the workpiece.
20. The apparatus of item 19, wherein the processing unit determines the cutting pattern so that each workpiece portion has a surface area that is a predetermined percentage of the total surface area of the workpiece.
21. The apparatus of item 20, wherein the workpiece portions have substantially equal surface areas.
22. The apparatus of item 19, wherein the processing unit determines the cutting pattern so that each workpiece portion has a weight that is a predetermined percentage of a weight of the workpiece.
23. The apparatus of item 22, wherein the workpiece portions have substantially equal weights.
24. The apparatus of item 19, wherein the processing unit determines the cutting pattern so that the workpiece portions include substantially equal numbers of a selected type of discontinuity.
25. The apparatus of item 19, wherein the processing unit determines the cutting pattern to minimize the number of a selected type of discontinuity located in the path of travel of the cutter.
26. A method of cutting a workpiece, comprising:
   (a) advancing the workpiece;
   (b) driving a cutter relative to the workpiece; and
   (c) intermittently cutting the workpiece to form a pattern comprising a plurality of sequential cut and uncut sections.
27. The method of item 26, further comprising:
   (a) scanning the workpiece to detect a physical characteristic of the workpiece; and
   (b) determining a cutting path according to the detected physical characteristic.
28. The method of item 26, the step of intermittently cutting the workpiece comprising:
   (a) directing a high pressure flow of fluid at the workpiece, thereby producing a cut section; and
   (b) selectively interrupting the high pressure flow to maintain an uncut section.
29. An apparatus for controlling the flow of a high pressure cutting fluid used for cutting, the apparatus comprising:
   (a) a fitting having an aperture through which the high pressure cutting fluid flows;
   (b) a rotary actuator disposed proximate to the fitting and capable of generating a rotary output torque;
   (c) a blocking device coupled to the rotary actuator, the blocking device rotating from a first position to a second position in response to the rotary output torque, the blocking device comprising a rod with a first end portion and a second end portion, the first end portion having a substantially flat first surface, and
   (d) wherein when the blocking device is in the first position, the first surface is positioned in the path of travel of the high pressure cutting fluid to substantially disrupt the flow of the high pressure cutting fluid, and when the blocking device is in the second position, the blocking device does not substantially disrupt the flow of the high pressure cutting fluid.
30. The apparatus of item 29, wherein the blocking device further comprises a substantially flat second surface, the blocking device being capable of coupling to the rotary actuator so that when the blocking device is in the first position, the second surface is positioned in the path of travel of the high pressure cutting fluid to substantially disrupt the flow of the high pressure cutting fluid.
31. The apparatus of item 30, wherein the second surface is located at the first end portion of the rod.
32. The apparatus of item 30, wherein the second surface is located at the second end portion of the rod.
33. The apparatus of item 29, wherein the first end portion of the blocking device further comprises at least one additional substantially flat surface positionable in the path of travel of the high pressure cutting fluid.
34. The apparatus of item 29, wherein the first end of the blocking device has a substantially square cross-section.
35. An apparatus for controlling the flow of a stream of high pressure fluid used for cutting, the apparatus comprising:
   (a) a housing;
   (b) a blocking member supported by the housing, the blocking member having a substantially flat first surface;
   (c) an actuator disposed within the housing, the actuator being coupled to the blocking member to selectively move the blocking member between a first position and a second position; and
   (d) wherein the first surface of the blocking member is located in the path of travel of the high pressure cutting fluid when the blocking member is in the first position so that the first surface disrupts the flow of the high pressure cutting fluid, and the first surface of the blocking member is located out of the path of the high pressure cutting fluid when the blocking member is in the second position so that the first surface does not disrupt the flow of the high pressure cutting fluid;
36. The apparatus of item 35, wherein the blocking member further comprises a substantially flat second surface opposite the first surface.
37. The apparatus of item 36, wherein the blocking member further comprises a substantially flat third surface and a substantially flat fourth surface opposite the third surface, the first, second, third, and fourth surfaces cooperating to define a portion of the blocking member having a substantially square cross-section.
38. A belt for conveying a first workpiece to have a pattern cut therein by one or more fluid jet cutters moving in one or more paths relative to the belt, the belt comprising:
   (a) a first side edge;
   (b) a second side edge opposite the first side edge; and
   (c) a plurality of linking portions disposed between the first and second side edges, each of the plurality of linking portions being coupled to at least one other linking portion, said plurality of linking portions cooperating to define a plurality of apertures extending through the belt,
   wherein at least some of the apertures have a size according to the proximity of the apertures relative to the path of the one or more fluid jet cutters.
39. The belt of item 38, wherein apertures located intermediate the first and second side edges of the belt are larger than apertures located adjacent the first or second side edges.
40. The belt of item 38, wherein at least some of the apertures have a size according to the number of fluid jet cutter paths located within a predetermined proximity to the apertures.
41. The belt of item 38, wherein the apertures have a size according to an amount of cutting fluid emitted from the fluid jet cutters that impinges an area within a predetermined proximity of the apertures.

The embodiments of the invention in which an exclusive property or privilege is claimed are defined as follows:

## Claims

1. An apparatus for cutting a workpiece, comprising:
(a) a conveyor for advancing the workpiece;
(b) a drive mechanism disposed above the conveyor, the drive mechanism being selectively moveable in one or more directions relative to the conveyor; and
(c) a cutter attached to the drive mechanism, the cutter adapted to intermittently cut the workpiece to form a predetermined pattern comprising a plurality of sequential cut and uncut sections.

2. The apparatus of Claim 1, further comprising a second cutter attached to the drive mechanism, the second cutter adapted to intermittently cut the workpiece to form a second predetermined pattern comprising a second plurality of sequential cut and uncut sections.

3. The apparatus of Claim 1, further comprising:
(a) a second drive mechanism disposed above the conveyor, the second drive mechanism being selectively moveable in one or more directions relative to the conveyor; and
(b) a second cutter attached to the second drive mechanism, the second cutter adapted to intermittently cut the workpiece to form a predetermined pattern comprising a plurality of sequential cut and uncut sections.

4. The apparatus of Claim 1, wherein the cutter is a fluid jet cutter.

5. The apparatus of Claim 4, wherein the apparatus further comprises a blocker to selectively interrupt a flow of cutting fluid emitted from the fluid jet cutter.

6. The apparatus of Claim 5, wherein the blocker comprises a rod.

7. The apparatus of Claim 6, wherein the rod is selectively pivotable to between a first position and a second position, the blocker interrupting the flow of cutting fluid emitted from the fluid jet cutter when located in the first position.

8. The apparatus of Claim 5, wherein the apparatus further comprises a processing unit for controlling a movement of the blocker between a first position and a second position, the blocker interrupting the flow of cutting fluid emitted from the fluid jet cutter when located in the first position.

9. The apparatus of Claim 4, further comprising a ventilation means, wherein a portion of cutting fluid emitted from the fluid jet cutter is reflected from the workpiece in particulate form, and the ventilation means removes a portion of the particulate material to an area remote to workpiece.

10. The apparatus of Claim 9, wherein the ventilation means removes air from an area proximate to the conveyor at a velocity of at least 250 feet per minute.

11. The apparatus of Claim 4, further comprising a drying means, wherein a portion of cutting fluid emitted from the fluid jet cutter remains on the apparatus after a cutting operation, the drying means removing at least a portion of the fluid disposed on the apparatus.

12. The apparatus of Claim 11, wherein the drying means emits a stream of drying air onto a surface of the conveyor.

13. The apparatus of Claim 1, wherein a cut section has a length several times the length of an uncut section.

14. The apparatus of Claim 1, wherein the cut section has a length from 1 to 10 times the length of an uncut section.

15. The apparatus of Claim 1, wherein the workpiece is one of a group consisting of pie dough, cookie dough, cookie bars, bread, flat bread, tortillas, cake, tort, candy, frozen foods, and baked goods.
